(19) Europäisches Patentamt
European Patent Office
Office européen des brevets

(11) **EP 3 340 707 A1**

(12) **EUROPEAN PATENT APPLICATION**

(43) Date of publication:
**27.06.2018 Bulletin 2018/26**

(51) Int Cl.:
**H04W 72/04** (2009.01)　　　**H04W 72/08** (2009.01)
**H04W 84/12** (2009.01)

(21) Application number: **16290248.0**

(22) Date of filing: **23.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent
91620 Nozay (FR)**

(72) Inventors:
　• **Abou Saleh, Ahmad
　2018 Antwerpen (BE)**
　• **Gacanin, Haris
　2018 Antwerpen (BE)**

(74) Representative: **IP HILLS NV
Hubert Frère-Orbanlaan 329
9000 Gent (BE)**

(54) **CHANNEL SELECTION DEVICE AND METHOD FOR WIRELESS LOCAL AREA NETWORK**

(57)　　A channel selection device (200) to determine a selected channel for use by a wireless access point (101; 231) comprises:
- an airtime availability determination unit (211) to determine from presence information (221) on exposed neighbouring wireless access points (104) for each target channel an airtime availability (222) of the wireless access point (101; 231);
- a hidden interference determination unit (212) to determine for each target channel and each associated wireless station (121, 122, 123; 232) a signal quality measure (224) from interference information (223) on hidden neighbouring wireless access points (102, 103); and
- a network capacity calculator (213) adapted to determine for each target channel an achievable network capacity (225) from the airtime availability (222) and the signal quality measure (224).

The channel selection device (200) further comprises a channel selector (202) to select the target channel with highest network capacity.

Fig. 2

## Description

### Technical Field

The present invention generally relates to selection of a channel that will be used in a wireless local area network or WLAN, for instance a WiFi network, for communication between an access point, e.g. a WiFi router, and one or more wireless stations, e.g. smartphones, tablet computers, laptop computers, media players, etc. The invention in particular concerns appropriate channel selection to mitigate interference from neighbouring wireless access networks and improve overall throughput.

### Background

Interference between neighbouring networks is one of the main problems that degrades user experience in WiFi networks. As a result of interference between neighbouring networks using the same or overlapping channels, the overall throughput of WiFi networks decreases, and individual connections between a wireless station and access point experience low bit rates, strong fluctuations in bit rates, and/or even interruptions in the connectivity.

It is known that appropriate selection of the channel used by a wireless access point helps in mitigating the interference from neighbouring networks. Consequently, many research has been conducted on channel selection algorithms for WLAN access points.

Known channel selection algorithms typically select the channel to be used by a wireless access point by optimizing a certain metric. Several metrics have been described to capture interference. Channel separation, i.e. the distance between channels used in neighbouring networks and the selected channel for use in the WLAN under consideration, for instance has been considered as a metric to optimize. The higher the separation from channels used in neighbouring networks, the less the interference. Alternative channel selection algorithms rely on the received signal-strength indicator or RSSI sensed from neighbouring wireless access points and attempt to select a channel with lowest RSSI sensed from neighbouring access points in order to mitigate interference.

### Summary

Although known channel selection algorithms based on optimization of an interference metric such as summed up RSSI or channel separation improve the throughput in WLANs for certain scenario's, these existing algorithms neglect many factors. The existing channel selection algorithms for instance do not consider co-channel or overlapping channel interference from hidden wireless access points, i.e. access points that are not sensed by the access point under consideration but which affect the throughput to certain wireless stations because the wireless station can sense them.

It is an objective of the present invention to disclose a channel selection device and method that resolves one or more shortcomings of existing channel selection algorithms for WLAN access points. More particularly, it is an objective of the invention to disclose a channel selection device and method that performs better in mitigating interference between neighbouring WLANs and consequently increases the overall throughput in WLANs as a result of more optimal channel selection.

The above defined objective is achieved by embodiments of the present invention as defined by claim 1, which entail a channel selection device adapted to determine a selected channel to be used by a wireless access point for communication with one or more wireless stations in a wireless local area network, the channel selection device comprising:

    A. a network capacity estimator adapted to estimate a network capacity of the wireless local area network for target channels, the network capacity estimator comprising:

        A1. an airtime availability determination unit adapted to obtain from the wireless access point presence information on exposed neighbouring wireless access points, and adapted to determine from the presence information for each respective target channel amongst the target channels an airtime availability of the wireless access point;

        A2. a hidden interference determination unit adapted to obtain from the one or more wireless stations interference information on hidden neighbouring wireless access points, i.e. neighbouring wireless access points that are not sensed by the access point, and adapted to determine for each respective target channel amongst the target channels and for each respective wireless station a signal quality measure from the interference information; and

        A3. a network capacity calculator adapted to determine for each respective target channel amongst the target channels an achievable capacity for communication between the access point and the one or more wireless stations from the airtime availability and the signal quality measure, and

the channel selection device further comprising:

> B. a channel selector adapted to select a target channel with highest network capacity amongst the target channels as said selected channel.

Thus, embodiments of the invention rely on an improved metric for frequency channel selection that better reflects the overall throughput and interference that will be experienced by the WLAN under consideration. The metric that is optimized is the network capacity. To optimize this metric, a differentiation is made between exposed neighbouring WLAN access points and hidden neighbouring WLAN access points. Presence information on exposed neighbouring WLAN access points is collected from the access point under consideration. The presence information is obtained by the access point under consideration through a neighbouring diagnostics scan, e.g. a WiFi scan, and at least reveals the amount N of neighbouring WLAN access points sensed by the access point under consideration and information indicative for the channel(s) used by the exposed neighbouring WLAN access point(s). Advantageously, the presence information also contains information identifying the neighbouring WLAN access points, e.g. the WiFi SSID, and/or information indicative for the signal strength of neighbouring WLAN access points as sensed by the access point under consideration, e.g. the RSSI. The presence information on exposed neighbouring WLAN access points that use the same channel or an overlapping channel for the target channel is used to determine an airtime availability for the access point under consideration when the target channel would be selected. Indeed, when the target channel will be selected, the access point under consideration will have to schedule its transmissions in order to share the selected channel with all exposed neighbouring WLAN access points operating on the same or overlapping channels. This may for instance be done through the Carrier Sense Multiple Access / Collision Avoidance (CSMA/CA) algorithm or any alternative contention resolving algorithm for nodes operating on the same or overlapping frequency bands. In addition to presence information on exposed neighbouring WLAN access points, interference information on hidden neighbouring WLAN access points is obtained. This interference information can be obtained from wireless stations present in the WLAN under consideration. These wireless stations may sense WLAN access points that are not sensed by the WLAN access point under consideration. When such V1/LAN access points sensed by wireless stations operate on the same channel or an overlapping channel of the target channel, they will reduce the overall throughput experienced in the WLAN under consideration. The interference information obtained from the wireless stations hence identifies the neighbouring WLAN access points sensed by the wireless station, e.g. the SSID thereof, and contains information indicative for the channel(s) used by such neighbouring WLAN access points. This way, the channel selection device according to embodiments of the present invention will be able to distinguish hidden neighbouring access points from exposed neighbouring access points. The interference information further preferably contains information indicative for the signal strength of the neighbouring access points as perceived by the wireless station, e.g. the RSSI established by the wireless station. This will enable the channel selection device according to embodiments of the present invention to determine a signal quality measure for the target channel and the access point under consideration that considers signal quality degradation through hidden neighbouring WLAN access points. The signal quality measure may for instance be the signal-to-interference and noise ratio. Given the airtime availability which accounts for the effect of exposed neighbouring access points and the signal quality measure which accounts for the effect of hidden neighbouring access points, the achievable network capacity can be estimated for the access point under consideration and a target channel. The target channel that has the highest achievable network capacity will be selected for use by the access point under consideration.

Embodiments' of the channel selection device according to the invention take into account several factors that affect the overall throughput in the network to dynamically select the frequency channel that will be used by a WLAN access point under consideration: interference information obtained from wireless stations is combined with presence information available at the WLAN access point under consideration in order to distinguish between exposed neighbouring access points and hidden neighbouring access points, and to consider the effect of both types of interfering nodes on the network capacity when a target frequency channel would be selected as operating channel for the WLAN access point under consideration. This results in improved channel selection with reduced contention from exposed WLAN access points, reduced co-channel and overlapping channel interference from hidden WLAN access points, hence improving the overall throughput in the WLAN under consideration and likely also in the neighbouring WLANs

In embodiments of the channel selection device according to the present invention, defined by claim 2, the airtime availability determination unit is adapted to determine from the presence information for each respective target channel an amount N of exposed neighbouring wireless access points using the respective target channel or a channel overlapping with the respective target channel, and adapted to determine the airtime availability for the respective target channel as 1 / (1+N).

Thus, the exposed neighbouring WLAN access points are supposed to be non-managed by the channel selection device according to the present invention or by the management centre where this channel selection device may form part of. As a consequence, it is assumed that no additional information on the non-managed neighbouring access points is available, except the presence information obtained from the access point under consideration. It is therefore assumed that all exposed neighbouring WLAN access points are saturated, i.e. they always need to transmit when they are allowed to transmit according to the CSMA/CA algorithm or alternate transmission scheduling algorithm that is implemented. Consequently, the airtime availability is assumed to be equally shared amongst the exposed neighbouring access points operating on the same or overlapping channel and the access point under consideration when this access point would operate on the target channel. The airtime availability hence can be calculated as 1 / (1+N) wherein N represents the amount of exposed WLAN access points sensed by the access point under consideration and operating on the target channel or a channel overlapping with the target channel.

The skilled person will appreciate that in situations where the channel selection device has access to additional information on the exposed neighbouring WLAN access points, e.g. because it manages one or more of such exposed neighbouring access points or the management centre where it forms part of manages one or more of such exposed neighbouring access points, the airtime availability may be calculated differently, taking into account for instance additional information on the saturation level of these exposed neighbouring access points.

In embodiments of the channel selection device according to the present invention, defined by claim 3, the hidden interference determination unit is adapted to determine from the interference information received from a respective wireless station for each respective target channel a list of hidden neighbouring wireless access points comprising neighbouring wireless access points that are not sensed by the access point according to the presence information and that are using a channel whose distance to the respective target channel is smaller than a predefined channel distance threshold.

Thus, the hidden neighbouring wireless access points are different for each wireless station: they constitute neighbouring access points that are sensed by the wireless station, e.g. appearing in the access point list obtained through a WiFi scan executed by the wireless station, but are not sensed by the access point under consideration, e.g. not appearing on the list of access points obtained through a WiFi scan executed by the access point under consideration. Further, only neighbouring access points whose operating channel is within a limited separation distance from the target channel are considered as hidden neighbouring wireless access points. The channel separation may for instance be restricted to 5, as it is assumed that interference from transmissions on channels that are farther away from the target channel, are limited or inexistent.

In embodiments of the channel selection device according to the present invention, defined by claim 4, the hidden interference determination unit is adapted to determine the signal quality measure for the respective target channel and the respective wireless station as:

$$SINR_k = \frac{RSSI_k}{\sum_i RSSI_i.A_i + Noise}$$

wherein

- k represents an index denoting the respective wireless station;
- i represents an index denoting a hidden wireless access point;
- $RSSI_k$ represents a signal strength from the wireless access point to the respective wireless station k;
- $RSSI_i$ represents a signal strength from a hidden neighbouring wireless access point i to the wireless station k, $RSSI_i$ forming part of the interference information;
- $A_i$ represents an attenuation factor determined from the distance between the respective target channel and a channel used by the hidden neighbouring wireless access point i; and
- Noise represents noise measured on the respective target channel.

Thus, embodiments of the invention may use the signal-to-interference and noise or SINR as measure for the signal quality for a target channel and particular wireless station. This SINR can be calculated from the signal strength values measured at the wireless station for the access point k under consideration and measured at the wireless station for the hidden neighbouring wireless access points i. The latter signal strengths measured for the hidden neighbouring wireless access points i may further be weighted via attenuation factors Ai that take into account the channel separation distance between the channel used by the hidden neighbouring wireless access point i and the target channel. These attenuation factors shall increase with increasing channel separation distance. The attenuation factors may be determined heuristically and can be obtained by the interference determination unit from a table preconfigured and stored in the channel selection device according to the invention.

In embodiments of the channel selection device according to the present invention, defined by claim 5, the attenuation factor $A_i$ is:

- 0.55 when the distance between the respective target channel and a channel used by said hidden neighbouring wireless access point i is 0;

- 2.46 when the distance between the respective target channel and a channel used by said hidden neighbouring wireless access point i is 1;
- 6.60 when the distance between the respective target channel and a channel used by said hidden neighbouring wireless access point i is 2;
- 34.97 when the distance between the respective target channel and a channel used by said hidden neighbouring wireless access point i is 3; and
- 51.87 when the distance between the respective target channel and a channel used by said hidden neighbouring wireless access point i is 4.

Consequently, the following table may be preconfigured and stored in the channel selection device according to the invention, and made available to the interference determination unit to enable the latter to calculate the SINR for a particular wireless station:

| Channel separation | 0 | 1 | 2 | 3 | 4 |
|---|---|---|---|---|---|
| Ai (in dB) | 0.55 | 2.46 | 6.6 | 34.97 | 51.87 |

In embodiments of the channel selection device according to the invention, defined by claim 6, the Noise is considered to be average white Gaussian noise.

Thus, the interference determination unit may assume the presence of white Gaussian noise to calculate the SINR for a particular wireless station.

In embodiments of the channel selection device according to the present invention, defined by claim 7, the network capacity calculator is adapted to determine the achievable capacity as a weighted sum of station capacities multiplied with the airtime availability, each station capacity out of the station capacities representing an achievable throughput for communication between the access point and a respective wireless station.

Indeed, the metric that will be maximized through embodiments of the channel selection device according to the present invention is the network capacity. This network capacity is calculated as a sum of capacities determined for each wireless station. The channel capacity for a single wireless station can be determined from the signal quality measure determined for that wireless station, e.g. the SINR for that wireless station. These channel capacities of all wireless stations can be summed up and be normalized using weights. The weights may be set equal to 1/M wherein M represents the number of wireless stations if an equal load distribution amongst the different wireless stations is assumed, or the weights may be related to the traffic demand of each wireless station if information on the traffic demand is available to the network capacity calculator. Such traffic demand information may for instance be obtained from the wireless stations themselves and/or may be collected historically. The so obtained normalized capacity summed across the wireless stations is multiplied with the airtime availability of the wireless access point under consideration in order to obtain the network capacity. This network capacity is calculated for each target channel. For each target channel, the contending exposed neighbouring access points may be different and consequently the airtime availability may be different. For each target channel, the list of hidden neighbouring access points may also be different and consequently also the SINR for the wireless stations and channel capacity of the wireless stations that sense these hidden, neighbouring access points will be different. As such, a network capacity can be calculated for each target channel, and this network capacity may be maximized to determine the selected channel amongst the target channels.

In embodiments of the channel selection device according to the present invention, defined by claim 8, for a respective wireless station the station capacity $C_k$ is determined as

$$C_k = B. \log_2(1 + \text{SINR}_k)$$

wherein:

- B represents the bandwidth used by the access point;
- $\text{SINR}_k$ represents a signal-to-interference and noise ratio determined for the wireless station k.

Indeed, it is known that the channel capacity for the channel between a wireless access point and a wireless station can be calculated from the signal to interference plus noise ration SINS and the bandwidth of the respective channel, e.g. 20 MHz. When the SINR is used as signal quality measure for the channel, and calculated from the RSSI values obtained from the wireless station as explained here above, the network capacity estimator can thus calculate the channel capacity for each wireless station. The channel capacities of the wireless stations are then combined, e.g. as explained here above in a weighted sum multiplied with the airtime availability, to determine the network capacity.

Embodiments of the channel selection device according to the present invention may be integrated in an access point, as defined by claim 9.

Alternatively, embodiments of the channel selection device according to the present invention may be integrated in a wireless local area network manager, as defined by claim 10.

In addition to a channel selection device, embodiments of the present invention also entail a channel selection method for determining a selected channel to be used by a wireless access point for communication with one or more wireless stations in a wireless local area network, the channel selection method being defined by claim 11, comprising:

A. estimating a network capacity of the wireless local area network for target channels, comprising:

A1. obtaining from the wireless access point presence information on exposed neighbouring wireless access points, and determining from the presence information for each respective target channel amongst the target channels an airtime availability of the wireless access point;

A2. obtaining from the one or more wireless stations interference information on hidden neighbouring wireless access points, i.e. neighbouring wireless access points that are not sensed by the access point, and determining for each respective target channel amongst the target channels and each respective wireless station a signal quality measure from the interference information; and

A3. determining for each respective target channel amongst the target channels an achievable capacity for communication between the access point and the one or more wireless stations from the airtime availability and the signal quality measure, and

the channel selection method further comprising:

B. selecting a target channel with highest network capacity amongst the target channels as the selected channel.

Embodiments of the present invention further entail a computer program product as defined by claim 12, comprising computer-executable instructions for performing embodiments of the method according to the invention when the program is run on a computer.

Embodiments of the present invention further also entail a computer readable storage medium or carrier as defined by claim 13, whereon embodiments of the computer program product according to the invention are stored.

Embodiments of the present invention further entail a data processing system as defined by claim 14, programmed for carrying out embodiments of the method according to the invention.

## Brief Description of the Drawings

Fig. 1 illustrates a scenario with different WLANs wherein a wireless access point 101 of one of the WLANs is managed through a management centre 141 that is hosting an embodiment of the channel selection device according to the present invention;

Fig. 2 is a block scheme of an embodiment of the channel selection device 200 according to the present invention, as used in the management centre 141 of Fig. 1;

Fig. 3 is a diagram illustrating the classification of neighbouring access points starting from collected neighbouring diagnostics 301 in an embodiment of the channel selection device or channel selection method according to the present invention; and

Fig. 4 illustrates a computing system suitable for hosting embodiments of the channel selection device according to the present invention and suitable for implementing the method for channel selection according to the present invention.

## Detailed Description of Embodiment(s)

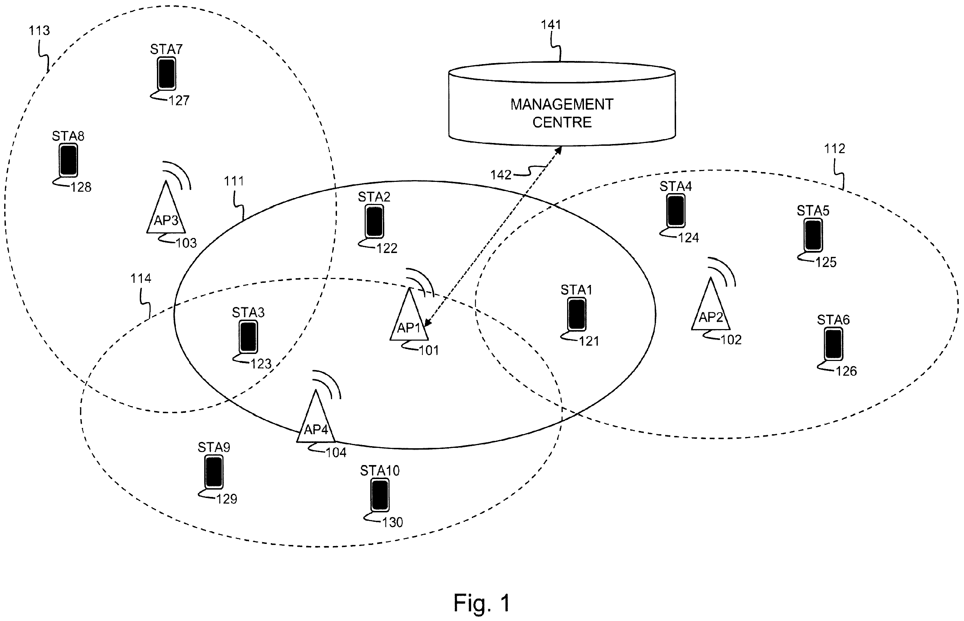

Fig. 1 illustrates a scenario wherein four wireless access points, AP1 or 101, AP2 or 102, AP3 or 103 and AP4 or 104, implement four wireless local area networks, respectively the WLANs 111, 112, 113 and 114. The WLANs 111, 112, 113 and 114 are interfering since their geographical coverage areas are overlapping as shown in Fig. 1. Fig. 1 further shows ten wireless stations, i.e. smartphones, tablet computers, laptop computers, media players, game consoles, and the like: STA1 or 121, ST2 or 122 and STA3 or 123 are supposed to be connected to wireless access point 101; STA4 or 124, STA5 or 125 and STA6 or 126 are supposed to be connected to wireless access point 102; STA7 or 127 and STA8 or 128 are supposed to be connected to wireless access point 103; STA9 or 129 and STA10 or 130 are supposed to be connected to wireless access point 104. The wireless stations STA1-STA10 are supposed to be static, i.e. during the channel selection process according to the present invention that will be described below in detail, they are supposed not to switch connectivity from one wireless station to another wireless station. As is further shown through arrow 142, access point 101 is managed through management centre 141. The following paragraphs will describe in more detail how the operating frequency channel of access point 101 is dynamically selected by the management centre 141 in order to optimize the network capacity.

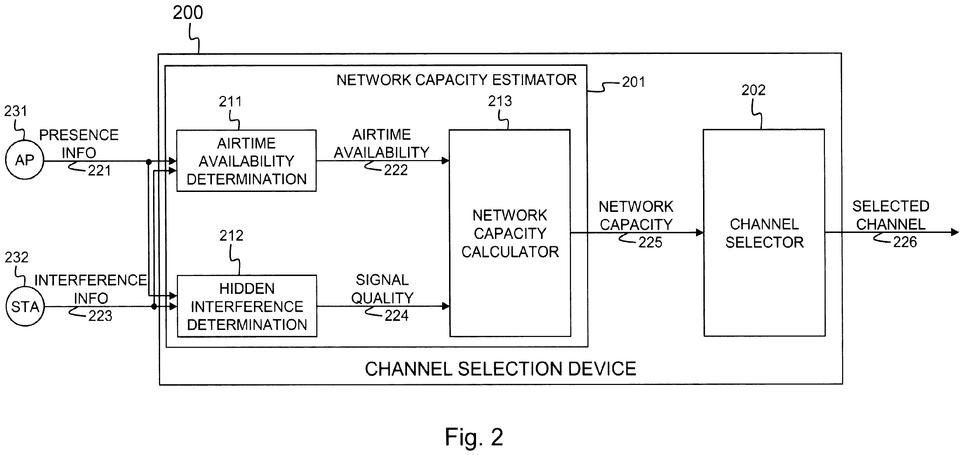

Fig. 2 shows an embodiment of the channel selection device 200 according to the present invention. The channel selection device 200 comprises a network capacity estimator 201 and a channel selector 202 whose input is coupled to an output of the network capacity estimator 201. The network capacity estimator 201 comprises an airtime availability determination unit or module 211, a hidden interference determination unit or module 212, and a network capacity calculator 213 whose respective inputs are coupled to outputs of the airtime availability determination unit 211 and hidden interference determination unit 212. The output of the network capacity calculator 213 serves as output for the network capacity estimator 201. Fig. 2 further shows a managed wireless access point, AP or 231. This managed wireless access point 231 may be considered to constitute the wireless access point 101 of Fig. 1, and the channel selection device 200 may be assumed to form part of the management centre 141. Fig. 2 further also shows a wireless station, STA or 232. This wireless station 232 stands representative for all the wireless stations that are connected to the considered access point 231. Referring again to Fig. 1, the wireless station 232 hence represents the associated wireless stations 121, 122 and 123. The operation of the functional blocks 211, 212, 213 and 202 that form part of the channel selection device 200 will be described in detail in the following paragraphs. It is thereto assumed that the management centre 141 manages only one WLAN access point, i.e. 101 or 231, whereas all other WLAN access points drawn in Fig. 1, i.e. 102, 103 and 104, remain unmanaged.

In the above scenario, it is realistic to assume that the channel selection device 200 that forms part of the management centre 141 can only get information from the managed access point 101 and its associated wireless stations 121, 122 and 123. More precisely, it is assumed that the channel selection device 200 has access to neighbouring diagnostics collected at the access point 101 through a WiFi scan, an associated device table available at the access point 101, and neighbouring diagnostics collected at the wireless stations 121, 122 and 123 through respective WiFi scans at these stations. The neighbouring diagnostics collected at access point 101 through a WiFi scan contain information on neighbouring access points that the managed access point 101 can sense. In the example of Fig. 1, access point 101 senses the presence of access point 104. The information obtained through the WiFi scan at access point 101 comprises the SSID of access point 104, the signal strength of access point 104 and the frequency channel, used by access point 104. The managed access point 101 further maintains a table of associated devices which in the example of Fig. 1 will comprise identifiers of wireless stations 121, 122 and 123 as it is assumed that these three wireless stations are connected to, i.e. associated with, the managed wireless access point 101. The neighbouring diagnostics collected at the wireless stations 121, 122 and 123 through respective WiFi scans contain information on neighbouring access points that these wireless stations can sense. In the example of Fig. 1, wireless station 121 senses neighbouring access point 102. The information obtained through the WiFi scan at wireless station 121 comprises the SSID of access point 102, the signal strength of access point 102, and the frequency channel used by access point 102. In the example of Fig. 1, wireless station 122 senses no neighbouring access points. In the example of Fig. 1, wireless station 123 senses neighbouring access points 103 and 104. The information obtained through the WiFi scan at wireless station 123 hence comprises the SSIDs of access points 103 and 104, the signal strengths of access points 103 and 104, and the frequency channels used by access points 103 and 104. In Fig. 2, the channel selection device 200, more precisely the airtime availability determination unit 211 therein, extracts presence information 221 from the above information collected from the managed access point 101. The presence information 221 represents information on exposed wireless access points. Further, the hidden interference determination unit 212 extracts interference information 223 from the above information collected from the associated wireless stations 121, 122, 123 of the managed access point 101. The interference information 223 represents information on hidden wireless access points. The channel selection device 200 in other words categorizes neighbouring wireless access points and makes a distinction between exposed access points and hidden access points.

Airtime availability determination unit 211 determines the airtime availability of the managed WLAN access point 101, i.e. the percentage of time this access point 101 can get hold of the medium. To determine this airtime availability, the unit 211 needs to be aware of the number of access nodes that content with the managed access point 101 for the same medium, i.e. the number N of so called exposed access points that operate on a frequency channel identical to or overlapping with the target channel that is considered for the managed access point 101. The airtime availability unit 211 hence starts by categorizing the neighbouring access points identified in the neighbouring diagnostics: neighbouring access points sensed by the managed access point 101 and operating on a frequency channel identical to or overlapping with the target frequency channel are classified as exposed neighbouring wireless access points. The exposed neighbouring wireless access points and the managed wireless access point 101 will schedule their transmissions according to the Carrier Sense Multiple Access / Collission Avoidance (CSMA/CA) mechanism or some other time-divided sharing mechanism of the medium. Neighbouring access points that operate on a frequency channel that is not overlapping with the target frequency channel, are classified as non-interfering neighbouring wireless access points. Transmissions of these neighbouring channels will not interfere with transmissions of the managed access point operating on the target frequency channel. At last, neighbouring access points that are not sensed by the managed access point but were sensed by wireless stations 121, 122, 123 associated with the managed access point 101 and that are operating on channel(s) identical to or overlapping with the target channel considered for the managed access point 101, are classified as hidden neighbouring wireless access points. These hidden neighbouring wireless access points transmit at the time the managed access point 101 is transmitting as a consequence of which their transmissions interfere with the transmissions of the managed access point 101. From the amount N of exposed neighbouring wireless access points, the airtime availability determination unit 211 determines the airtime availability of the managed access point 101 at the target frequency channel, i.e. the percentage of time the managed access point will be able to transmit on the target frequency channel as:

$$AA = \frac{1}{1+N} \qquad (1)$$

Herein, AA represents the airtime availability of the managed access point 101 at the target frequency channel, N represents the amount of exposed neighbouring wireless access points, and it is assumed that the management centre 141 where the channel selection device 200 forms part of, does not manage any of the exposed neigbouring wireless access points. As a consequence, the management centre 141 has no additional information on these exposed neighbouring access points and must assume that each of these exposed neighbouring access points is saturated, i.e. it always needs to transmit. Should additional information be available on the exposed neighbouring access nodes, e.g. because some of them are managed by the same management centre 141, this additional information could be considered in more advanced formulas to calculate the airtime availability. The airtime availability AA determined in (1) is supplied by the airtime availability determination unit 211 to the network capacity calculator 213 as is indicated by arrow 222 in Fig. 2.

The hidden interference determination unit 212 determines the signal quality for each associated wireless station and the target frequency channel considered for the managed access point 101. The hidden interference determination unit 212 thereto also distinguishes between neighbouring access points sensed by the managed access point 101, like 104 in Fig. 1, and neighbouring access points sensed by the considered associated wireless station, like 102 for wireless station 121 and 103 as well as 104 for wireless station 123. If a neighbouring access point is sensed by the considered associated wireless station but not sensed by the managed access point 101 and such neighbouring access point is operating on a frequency channel that is less than 5 channels away from the target frequency channel, then this neighbouring access point is considered as a hidden neighbouring access point whose transmission will interfere with the packet reception at the considered associated wireless station. For the considered associated wireless station and the target frequency channel, such hidden neighbouring access point will be taken into account when determining the signal quality. When the signal-to-interference plus noise or SINR parameter is considered as measure for the signal quality, the hidden interference determination unit 212 consequently can determine the signal quality for the associated wireless station k and considered target frequency channel as follows:

$$SINR_k = \frac{RSSI_k}{\sum_i RSSI_i . A_i + Noise} \qquad (2)$$

Herein:

- k represents the index denoting the respective wireless station, e.g. 1 for wireless station 121 or 3 for wireless station 123;
- i represents an index denoting a hidden wireless access point, e.g. 2 in the assumption that access point 102 turns out to be a hidden access point for wireless station 121 on the target frequency or 3 in the assumption that access point 103 turns out to be a hidden access point for wireless station 123 on the target frequency;
- $RSSI_k$ represents the signal strength from the managed wireless access point 101 to the respective wireless station k, e.g. the RSSI of access point 101 measured at wireless station 121 through a WiFi scan executed at wireless station 121 or the RSSI of access point 101 measured at wireless station 123 through a WiFi scan executed at wireless station 123;

- $RSSI_i$ represents the signal strength from a hidden neighbouring wireless access point i to the wireless station k, e.g. the RSSI of access point 102 measured at wireless station 121 through a WiFi scan executed at wireless station 121 (still assuming that access point 102 constitutes a hidden neighbouring access point for wireless station 121 on the target frequency channel) or the RSSI of access point 103 measured at wireless station 123 through a WiFi scan executed at wireless station 123 (still assuming that access point 103 constitutes a hidden neighbouring access point for wireless station 123 on the target frequency channel); in Fig. 2 $RSSI_i$ forms part of the interference information 223 that the hidden interference determination unit 212 obtains from the associated wireless stations 232;
- $A_i$ represents an attenuation factor determined from the distance between the respective target channel and the channel used by the hidden neighbouring wireless access point i, whereby it is noticed that this distance is a value ranging from 0 to 4 in the above described embodiment; and
- Noise represents noise measured on the respective target channel.

The following heuristic table may be preconfigured and stored in memory, either internal in or external to the channel selection device 200, and may be made available to the hidden interference determination unit 212 to enable the latter to determine the attenuation factor $A_i$ for the target frequency channel and a particular hidden neighbouring wireless access node sensed by a particular associated wireless station:

| Channel separation | 0 | 1 | 2 | 3 | 4 |
|---|---|---|---|---|---|
| $A_i$ (in dB) | 0.55 | 2.46 | 6.6 | 34.97 | 51.87 |

Using formula (2), the hidden interference determination unit 212 determines the signal quality $SINR_k$ for each associated wireless station k, i.e. for wireless stations 121, 122 and 123, and for each considered target frequency. The signal quality values $SINR_k$ are then supplied to the network capacity calculator 213 as indicated by arrow 224 in Fig. 2.

From the airtime availability, AA or 222, and the signal quality, $SINR_k$ or 224, the network capacity calculator 213 determines the network capacity for the managed WLAN 111 as follows:

$$NC = AA \sum_k W_k . C_k \qquad (3)$$

Herein:

- NC represents the estimated network capacity of the managed WLAN 111;
- AA represents the airtime availability of the managed access point 101 for the considered target frequency channel;
- $W_k$ represents a normalized weight for the associated wireless stations k, that may for instance be proportional to the traffic demand of each of these associated wireless stations, i.e. information that can be collected from the associated wireless station or that can be determined from historical data, or that may be equal to 1/M wherein M represents the number of associated wireless stations for the managed access point 101; it is noticed that the weights $W_k$ can also be used to prioritize users or wireless stations by weighting their channel capacity higher; and
- $C_k$ represents the channel capacity of the communication channel between the managed access point 101 and the associated wireless station k.

It is assumed that the channel is well modeled by an Additive White Gaussian Noise (AWGN). In such case, the channel capacity $C_k$ of the communication channel between the managed access point 101 and the associated wireless station k is given by:

$$C_k = B . \log_2(1 + SINR_k)$$

$$(4)$$

Herein, B is the bandwidth used by the managed access point, e.g. 20 MHz, and $SINR_k$ is the signal-to-interference plus noise ratio determined for the wireless station k wherein the interference from hidden neighbouring wireless access points is taken into account via formula (2).

The network capacity $C_k$ is determined for each considered target frequency and supplied to the channel selector 202 as is indicated by arrow 225 in Fig. 2. The channel selector 202 determines the selected channel 226 for use by the managed wireless access node 101 as the target frequency channel that has the highest network capacity NC.

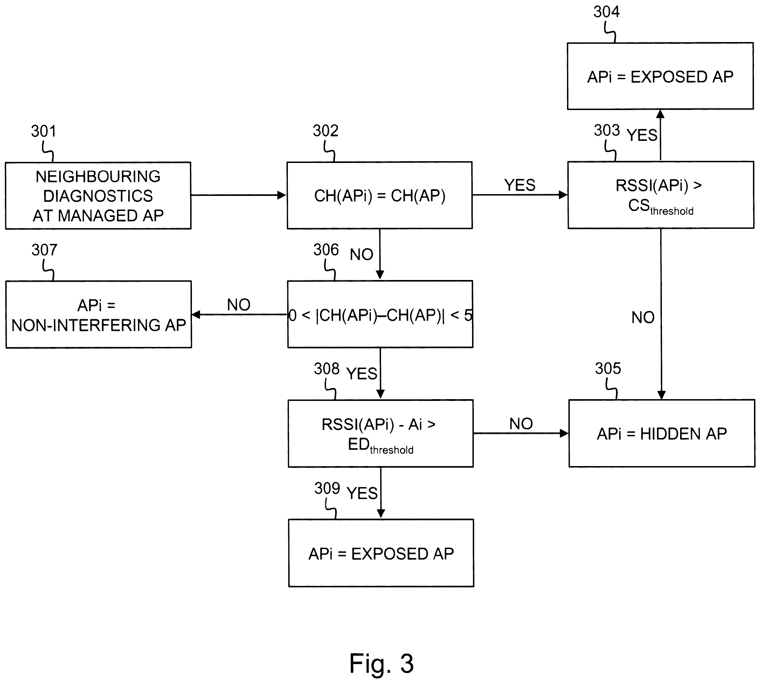

Fig. 3 illustrates the classification of neighbouring access points into exposed neighbouring access points, hidden neighbouring access points or non-interfering neighbouring access points. This classification of neighbouring access points lies at the basis of the present invention and in embodiments of channel selection device according to the present invention can be implemented by the airtime availability determination unit or the hidden interference determination unit 212 or by both. Starting point of the classification of neighbouring access points is the neighbouring diagnostics information 301 obtained from the managed access point AP, for instance access point 101 in Fig. 1. The neighbouring diagnostics information 302 comprises both diagnostics information collected by the managed access point AP through a self-executed WiFi scan and diagnostics information collected by the managed access point AP from its associated wireless stations that also execute WiFi scans. Thereafter, each neighbouring access point $AP_i$ is classified through the steps 302-309. First, in step 302, it is verified if the neighbouring access point $AP_i$ is operating on a frequency channel $CH(AP_i)$ that is identical to the target frequency channel $CH(AP)$ under consideration for the managed access point AP. If the operating channel $CH(AP_i)$ of the neighbouring access node $AP_i$ corresponds to the target frequency channel, it is checked in step 303 of the signal strength sensed for that neighbouring access point, i.e. the Received Signal Strength Indication $RSSI(AP_i)$, exceeds a carrier sensing threshold $CS_{threshold}$, typically set equal to -82 dBm. If this is the case, it is assumed that the neighbouring access point $AP_i$ was sensed by the managed access point AP. Consequently, the neighbouring access point $AP_i$ is classified as an exposed neighbouring access point in step 304. If this is not the case, it is assumed that the neighbouring access point $AP_i$ was not sensed by the managed access point AP but sensed by one of its associated wireless stations. As a consequence, the neighbouring access point $AP_i$ will be classified as a hidden neighbouring access point in step 305. In the situation wherein the operating channel of the neighbouring access node $AP_i$ does not coincide with the target frequency channel $CH(AP)$, it is verified in step 306 if the operating channel $CH(AP_i)$ of the neighbouring access point $AP_i$ has a distance of less than 5 channels away from the target frequency channel $CH(AP)$ under consideration for the managed access point AP. If this is not the case, the neighbouring access point $AP_i$ is classified as a non-interfering neighbouring access point in step 307. On the other hand, if the distance between the operating channel $CH(AP_i)$ of the neighbouring access point $AP_i$ and the target frequency channel $CH(AP)$ is less than 5, the neighbouring, access point $AP_i$ and the managed access point AP will use overlapping channels as a result of which their transmissions will interfere. In this case, it is verified in step 308 if the signal strength sensed for the neighbouring access point, i.e. $RSSI(AP_i)$, minus an attenuation factor Ai (in dB) that depends on the distance between the operating channel of the neighbouring access node $AP_i$ and the target frequency channel, exceeds an energy detection threshold $ED_{threshold}$, typically set equal to -62 dBm. If so, it is assumed that the neighbouring access point $AP_i$ is sensed by the managed access point AP. Consequently, the neighbouring access point $AP_i$ is classified as an exposed neighbouring access point in step 309. If this is not the case, it is assumed that the neighbouring access point $AP_i$ is not sensed by the managed access point AP but sensed by one of its associated wireless stations. Consequently, the neighbouring access point $AP_i$ is classified as a hidden neighbouring access point in step 305. All neighbouring access points Ai are thus classified as exposed, hidden or non-interfering access points. The list of exposed neighbouring access points is thereafter used to determine the airtime availability of the managed access point on the target frequency channel as explained above. The list of hidden neighbouring access points is used to determine a signal quality measure for the target frequency channel between the managed access point and its associated wireless stations, also explained above. Both the airtime availability and signal quality measure enable to estimate the achievable network capacity in the WLAN when the managed access point switches to the target frequency channel. The managed access point will be pushed towards the target frequency channel with highest achievable network capacity thereby mitigating the overall interference and optimizing the overall throughput. The method shall be applied to dynamically select the frequency channel for the managed access point, e.g. at regular time intervals or whenever the overall throughput drops below a certain threshold, whenever the throughput in a single channel to a wireless station drops below a certain threshold, whenever measured signal strengths from neighbouring access points change to a certain extent, whenever new neighbouring access points are discovered, or alternative criteria are satisfied that trigger re-execution of the channel selection method.

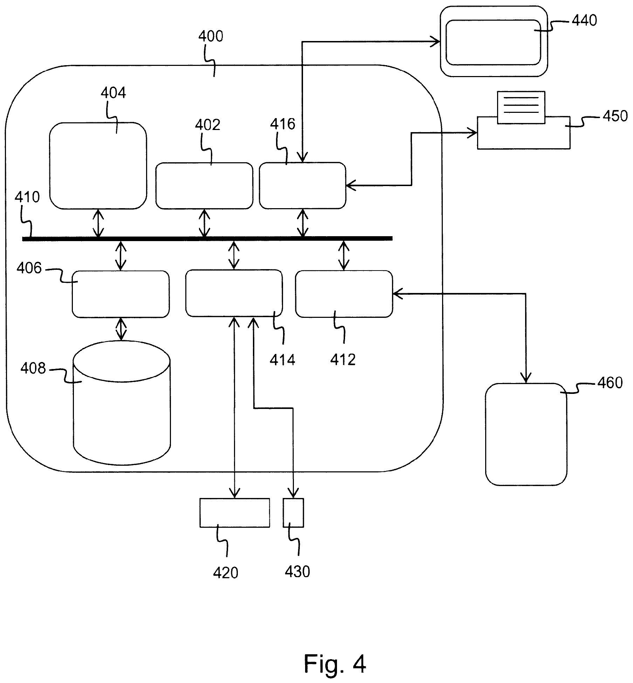

Fig. 4 shows a suitable computing system 400 for hosting the channel selection device according to the present invention and suitable for implementing the channel selection method according to the present invention, embodiments of which are illustrated by Fig. 1 - Fig 3. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example two 1 Gb Ethernet interfaces that enables computing system 400 to communicate with other devices and/or systems, for example mechanisms for communicating with one or more other computing systems. The communication interface 412 of computing system 400 may be connected to such another computing system 460 by means of a local area network (LAN) or a wide area network (WAN), such as for example the internet, in which case the other computing system may for example comprise a suitable web server. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example 1 TB SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used.

The steps executed in the channel selection method according to the present invention, illustrated by the above embodiments, may be implemented as programming instructions stored in local memory 404 of the computing system 400 for execution by its processor 402. Alternatively the instructions may be stored on the storage element 408 or be accessible from another computing system through the communication interface 412.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A channel selection device (200) adapted to determine a selected channel to be used by a wireless access point (101; 231) for communication with one or more wireless stations (121, 122, 123) in a wireless local area network (111), said channel selection device (200) comprising:

    A. a network capacity estimator (201) adapted to estimate a network capacity (225) of said wireless local area network (111) for target channels, said network capacity estimator (201) comprising:

        A1. an airtime availability determination unit (211) adapted to obtain from said wireless access point (101; 231) presence information (221) on exposed neighbouring wireless access points (104), and adapted to determine from said presence information (221) for each respective target channel amongst said target channels an airtime availability (222) of said wireless access point (101; 231);
        A2. a hidden interference determination unit (212) adapted to obtain from said one or more wireless stations (121, 122, 123; 232) interference information (223) on hidden neighbouring wireless access points (102, 103), i.e. neighbouring wireless access points that are not sensed by said access point (101), and adapted to determine for each respective target channel amongst said target channels and each respective wireless station (121, 122, 123; 232) a signal quality measure (224) from said interference information (223); and
        A3. a network capacity calculator (213) adapted to determine for each respective target channel amongst said target channels an achievable capacity (225) for communication between said access point (101) and said one or more wireless stations (121, 122, 123) from said airtime availability (222) and said signal quality measure (224), and

said channel selection device (200) further comprising:

B. a channel selector (202) adapted to select a target channel with highest network capacity amongst said target channels as said selected channel.

2. A channel selection device (200) according to claims 1, wherein said airtime availability determination unit (211) is adapted to determine from said presence information (221) for each respective target channel an amount N of exposed neighbouring wireless access points using said respective target channel or a channel overlapping with said respective target channel, and adapted to determine said airtime availability (222) for said respective target channel as 1 / (1+N).

3. A channel selection device (200) according to claim 1, wherein said hidden interference determination unit (212) is adapted to determine from said interference information (223) received from a respective wireless station (121) for each respective target channel a list of hidden neighbouring wireless access points (102) comprising neighbouring wireless access points that are not sensed by said access point (101) according to said presence information (221) and that are using a channel whose distance to said respective target channel is smaller than a predefined channel distance threshold.

4. A channel selection device (200) according to claim 1 or claim 3, wherein said hidden interference determination unit (212) is adapted to determine said signal quality measure (224) for said respective target channel and said respective wireless station (121) as:

$$SINR_k = \frac{RSSI_k}{\sum_i RSSI_i . A_i + Noise}$$

wherein

- k represents an index denoting said respective wireless station (121);
- i represents an index denoting a hidden wireless access point (102);
- $RSSI_k$ represents a signal strength from said wireless access point (101) to said respective wireless station k (121);
- $RSSI_i$ represents a signal strength from a hidden neighbouring wireless access point i (102) to said wireless station k (121), $RSSI_i$ forming part of said interference information (223);
- $A_i$ represents an attenuation factor determined from the distance between said respective target channel and a channel used by said hidden neighbouring wireless access point i (102); and
- Noise represents noise measured on said respective target channel.

5. A channel selection device (200) according to claim 4, wherein said attenuation factor $A_i$ is:

- 0.55 when the distance between said respective target channel and a channel used by said hidden neighbouring wireless access point i (102) is 0;
- 2.46 when the distance between said respective target channel and a channel used by said hidden neighbouring wireless access point i (102) is 1;
- 6.60 when the distance between said respective target channel and a channel used by said hidden neighbouring wireless access point i (102) is 2;
- 34.97 when the distance between said respective target channel and a channel used by said hidden neighbouring wireless access point i (102) is 3; and
- 51.87 when the distance between said respective target channel and a channel used by said hidden neighbouring wireless access point i (102) is 4.

6. A channel selection device (200) according to claim 4, wherein Noise is considered to be average white Gaussian noise.

7. A channel selection device (200) according to claim 1, wherein said network capacity calculator (213) is adapted to determine said achievable capacity (225) as a weighted sum of station capacities multiplied with said airtime availability (222), each station capacity out of said station capacities representing an achievable throughput for communication between said access point (101) and a respective wireless station (121).

**8.** A channel selection device (200) according to claim 7, wherein for a respective wireless station (121) said station capacity $C_k$ is determined as

$$C_k = B.\log_2(1 + SINR_k)$$

wherein:

- B represents the bandwidth used by said access point (101);
- $SINR_k$ represents a signal-to-interference and noise ratio determined for said wireless station k (121).

**9.** A channel selection device (200) according to claim 1, wherein said channel selection device (200) is integrated in an access point (101).

**10.** A channel selection device (200) according to claim 1, wherein said channel selection device (200) is integrated in a wireless local area network manager (141).

**11.** A channel selection method for determining a selected channel to be used by a wireless access point (101) for communication with one or more wireless stations (121, 122, 123) in a wireless local area network (111), said channel selection method comprising:

A. estimating a network capacity (225) of said wireless local area network (111) for target channels, comprising:

A1. obtaining from said wireless access point (101) presence information (221) on exposed neighbouring wireless access points (104), and determining from said presence information (221) for each respective target channel amongst said target channels an airtime availability (222) of said wireless access point (101);
A2. obtaining from said one or more wireless stations (121, 122, 123) interference information (223) on hidden neighbouring wireless access points (102, 103), i.e. neighbouring wireless access points that are not sensed by said access point (101), and determining for each respective target channel amongst said target channels and each respective wireless station (121, 122, 123) a signal quality measure (224) from said interference information (223); and
A3. determining for each respective target channel amongst said target channels an achievable capacity (225) for communication between said access point (101) and said one or more wireless stations (121, 122, 123) from said airtime availability (222) and said signal quality measure (224), and

said channel selection method further comprising:

B. selecting a target channel with highest network capacity (225) amongst said target channels as said selected channel.

**12.** A computer program product comprising computer-executable instructions for performing the method according to claim 11 when the program is run on a computer.

**13.** A computer readable storage medium comprising the computer program product according to claim 12.

**14.** A data processing system programmed for carrying out the method according to claim 11.

Fig. 1

CHANNEL SELECTION DEVICE 200

NETWORK CAPACITY ESTIMATOR 201

AIRTIME AVAILABILITY DETERMINATION 211

HIDDEN INTERFERENCE DETERMINATION 212

NETWORK CAPACITY CALCULATOR 213

AIRTIME AVAILABILITY 222

SIGNAL QUALITY 224

NETWORK CAPACITY 225

CHANNEL SELECTOR 202

SELECTED CHANNEL 226

PRESENCE INFO 221

INTERFERENCE INFO 223

AP 231

STA 232

Fig. 2

EP 3 340 707 A1

```
                                                              ┌──────────────────┐
                                                         304  │                  │
                                                         ╷    │ APi = EXPOSED AP │
                                                         │    │                  │
                                                              └──────────────────┘
                                                                       ▲
                                                                       │ YES
                                                         303 ╷
   ┌──────────────┐      ┌──────────────┐       YES      ┌──────────────────┐
301│ NEIGHBOURING │  302 │              │ ──────────────▶│   RSSI(APi) >    │
╷  │ DIAGNOSTICS  │───▶╷ │ CH(APi) =    │                │   CS threshold   │
│  │ AT MANAGED AP│    │ │   CH(AP)     │                │                  │
   └──────────────┘      └──────────────┘                └──────────────────┘
                                │                                  │
                          306   │ NO                               │ NO
   ┌──────────────┐       ╷     ▼                                  ▼
307│     APi =    │  NO   ┌──────────────┐            305   ┌──────────────────┐
╷  │NON-INTERFERING│◀─────│0 <|CH(APi)─  │             ╷    │                  │
│  │      AP      │       │  CH(AP)| < 5 │                  │  APi = HIDDEN AP │
   └──────────────┘       └──────────────┘                  │                  │
                             │                              └──────────────────┘
                       308   │ YES                                  ▲
                       ╷     ▼                                      │
                       ┌──────────────┐           NO                │
                       │ RSSI(APi)-Ai >│ ──────────────────────────┘
                       │  ED threshold │
                       └──────────────┘
                           │
                     309   │ YES
                     ╷     ▼
                       ┌──────────────┐
                       │              │
                       │APi = EXPOSED AP│
                       │              │
                       └──────────────┘
```

## Fig. 3

Fig. 4

Europäisches
Patentamt

European
Patent Office

Office européen
des brevets

# EUROPEAN SEARCH REPORT

**Application Number**

EP 16 29 0248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHI-FAI WONG ET AL: "MMC05-6: PACA: Peer-Assisted Channel Assignment for Home Wireless LANs", IEEE GLOBECOM 2006 : 2006 GLOBAL TELECOMMUNICATIONS CONFERENCE ; SAN FRANCISCO, CA, USA, 27 NOVEMBER - 1 DECEMBER 2006, IEEE, PISCATAWAY, NJ, 1 November 2006 (2006-11-01), pages 1-6, XP031075228, ISBN: 978-1-4244-0356-1 * the whole document * | 1-3,9-14 | INV. H04W72/04 H04W72/08 H04W84/12 |
| A | US 2007/242621 A1 (NANDAGOPALAN SAISHANKAR [US] ET AL) 18 October 2007 (2007-10-18) * abstract; figures 2,3,10-18 * * paragraph [0003] - paragraph [0016] * * paragraph [0052] - paragraph [0064] * | 1-14 | |
| A | LG ELECTRONICS INC: "Further analysis on hidden node detection based no RSSI report", 3GPP DRAFT; R2-152776 FURTHER ANALYSIS ON HIDDEN NODE DETECTION BASED NO RSSI REPORT, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG2, no. Fukuoka, Japan; 20150525 - 20150529 22 May 2015 (2015-05-22), XP050977745, Retrieved from the Internet: URL:http://www.3gpp.org/ftp/tsg_ran/WG2_RL 2/TSGR2_90/Docs/ [retrieved on 2015-05-22] * the whole document * | 1-14 | |

**TECHNICAL FIELDS SEARCHED (IPC)**

H04W

The present search report has been drawn up for all claims

| Place of search | Date of completion of the search | Examiner |
|---|---|---|
| Munich | 17 May 2017 | Galli, Paolo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 3 340 707 A1**

## ANNEX TO THE EUROPEAN SEARCH REPORT
## ON EUROPEAN PATENT APPLICATION NO.

EP 16 29 0248

17-05-2017

| Patent document cited in search report | Publication date | Patent family member(s) | | Publication date |
|---|---|---|---|---|
| US 2007242621 A1 | 18-10-2007 | AT | 516641 T | 15-07-2011 |
| | | BR | PI0709818 A2 | 26-07-2011 |
| | | CA | 2646483 A1 | 25-10-2007 |
| | | CN | 101421990 A | 29-04-2009 |
| | | EP | 2014024 A1 | 14-01-2009 |
| | | HK | 1129789 A1 | 04-04-2014 |
| | | JP | 4903859 B2 | 28-03-2012 |
| | | JP | 2009533976 A | 17-09-2009 |
| | | KR | 20080113100 A | 26-12-2008 |
| | | RU | 2008144693 A | 20-05-2010 |
| | | US | 2007242621 A1 | 18-10-2007 |
| | | WO | 2007121340 A1 | 25-10-2007 |

EPO FORM P0459

For more details about this annex : see Official Journal of the European Patent Office, No. 12/82